# EUROPÄISCHE PATENTANMELDUNG

(11) **EP 1 013 235 A2**
(43) Veröffentlichungstag der Anmeldung: **28.06.2000**
(21) Anmeldenummer: 99890384.3
(22) Anmeldetag: 13.12.1999
(51) Int. Cl.: A61C 1/05

(54) **Handstück**

(30) Priorität: 14.12.1998 AT 208398
(71) Anmelder: DENTALWERK BÜRMOOS GESELLSCHAFT M.B.H., 5111 Bürmoos (AT)
(72) Erfinder: Kardeis, Richard, 5111 Bürmoos (AT)
(74) Vertreter: Patentanwälte BARGER, PISO & PARTNER

(57) **Zusammenfassung**

Die Erfindung betrifft ein ärztliches, insbesondere zahnärztliches, Handstück zur Verwendung mit einem innengekühlten Werkzeug (3) mit einem axialen Hohlraum (4), bei dem das Kühlfluid in in wesentlicher radialer Richtung durch eine Bohrung (9) des Werkzeugschaftes (3) in den axialen Hohlraum (4) geführt wird und wobei die Bohrung (9) zwischen zwei, axialen Abstand voneinander aufweisenden, im Handstückkopf (1) angeordneten und ihn gegenüber dem Werkzeugschaft abdichtenden, Dichtungen angeordnet ist.

Die Erfindung ist dadurch gekennzeichnet, daß die Dichtungen Dichtscheiben (10',12') sind, deren Dichtflächen mit dem Werkzeugschaft im wesentlichen normal, konisch oder sphärisch zur Werkzeugachse verlaufen.

Die Erfindung betrifft weiters Ausgestaltungen der Dichtung und daran adaptierte Werkzeuge.

## Beschreibung

Die Erfindung betrifft ein ärztliches, insbesondere zahnärztliches, Handstück zur Verwendung mit einem innengekühlten Werkzeug mit einem axialen Hohlraum, bei dem das Kühlfluid in im wesentlichen radialer Richtung durch eine Bohrung des Werkzeugschaftes in den axialen Hohlraum geführt wird und wobei die Bohrung zwischen zwei, axialen Abstand voneinander aufweisenden, im Handstückkopf angeordneten und ihn gegenüber dem Werkzeugschaft abdichtenden Dichtungen angeordnet ist.

Solche Handstücke sind beispielsweise aus der weiter unten besprochenen DE 39 30 114 A bekannt.

Bei einer Vielzahl von Anwendungsgebieten, insbesondere beim Bearbeiten von tiefen Bohrlöchern, ist die Verwendung von Kühlflüssigkeit, die auf den Werkzeugmantel aufgebracht wird und diesen Mantel entlang nach unten, zur Bearbeitungsstelle, fließt, nicht ausreichend. Dies hängt einerseits mit den dünnen Durchmessern der Bohrwerkzeuge zusammen, andererseits mit den hohen Drehzahlen, die heute zumeist verwendet werden, so daß es zum Abschleudern des Kühlmittels kommt, bevor es die eigentliche Bearbeitungsstelle erreicht hat.

Dazu kommt noch, daß bei derartigen herkömmlichen Bohrern, die von der Bearbeitungsstelle abzuführende Kühlflüssigkeit im gleichen, engen Ringspalt transportiert werden muß, wie die neu hinzukommende, aber in entgegengestzte Richtung, wodurch es zu Vermischungen und zu Unterbrechung des Kühleffektes und auch des Ausspüleffektes für das zerkleinerte Bohrmaterial kommt, so daß die Behandlung des Gewebes, zumeist eines Knochens, so gut wie ungekühlt und ohne Austrag des Bohrmaterials erfolgt, was für den Patienten unangenehm ist und aus medizinischer Sicht Nachteile mit sich bringt.

Es wurde daher bereits seit längerem versucht, diese beiden Flüssigkeitsströme so voneinander zu trennen, daß das Bohrwerkzeug hohl ausgeführt wird, und in diesem Hohlraum die frische Kühlflüssigkeit zugeführt wird und daß im Spalte zwischen dem Bohrer und der Wandung des Bohrloches die erwärmte Kühlflüssigkeit und das Bohrklein ausgetragen wird.

Dabei stieß man erneut auf Schwierigkeiten, da es notwendig ist, im Werkzeugkopf die Kühlflüssigkeit gegen die Zentrifugal- und Coriolisbeschleunigung ins Bohrerinnere zu drücken, ohne nennenswerte Mengen der Kühlflüssigkeit nach oben in den Bohrkopf bzw. nach unten, aus dem Bohrkopf heraus, austreten zu lassen.

Die naheliegende Lösung, Dichtungen oberhalb und unterhalb dieser Einbringungsstelle anzuordnen, ist wegen der dabei auftretenden Reibung, der Beschädigungen der zumeist aus O-Ringen bestehenden Dichtungen und des zusätzlichen Antriebsbedarfes für den Werkzeugmotor nachteilig.

Es hat auch Versuche gegeben, mit nur einer Dichtung, nämlich zum Werkzeug hin, auszukommen, beispielsweise in der DE 38 28 866 C, die eine ganze Reihe von Varianten für die Einbringung eines Kühlmittels in einen hohlen Bohrer zeigt. In dieser Druckschrift wird auch vorgeschlagen, O-Ring-Dichtungen am Bohrerschaft anzubringen und an konischen Dichtflächen des Handstückkopfes rotierend dichten zu lassen. Dies verteuert und schwächt die Bohrer (Umfangsnut!) enorm, erschwert ihre Lagerung und führt dazu, daß die auftretende Reibungskraft einen großen Hebelsarm aufweist, der ein großes Bremsmoment bewirkt. Der Verschleiß, auch der Gegenfläche, ist daher groß.

Andere Varianten, mit fester Dichtung im Handstückkopf, sind aus der DE 39 30 114 A bekannt, wobei auch vorgesehen ist, die Kühlflüssigkeit am oberen Ende des Werkzeugkopfes zuzuführen, um auch hier mit nur einer Dichtung auszukommen. Durch diese Maßnahme ist es aber nicht möglich, einen Druckknopf zur Betätigung der Spannvorrichtung vorzusehen und es ist darüber hinaus extrem nachteilig, daß die doch austretende Kühlflüssigkeit am Werkzeugkopf nach oben, somit in den Blickbereich des Benutzers sprüht.

Eine grundlegend anders wirkende Vorkehrung ist aus der DE 40 39 162 C bekannt: Hiebei wird Druckluft verwendet, die oberhalb und unterhalb der Zufuhrstelle einen Druckpolster ausbildet und so verhindert, daß die zugeführte Kühlflüssigkeit in axialer Richtung entlang des Werkzeugschaftes, entweder in den Werkzeugkopf eintritt, oder aus diesem dem Werkzeug entlang austritt. Die Probleme dieser Lösung liegen in der Notwendigkeit, große Mengen von Luft nur zu diesem Zweck bereitzustellen (und auch abzuführen) und auch in der Notwendigkeit, den Handstückkopf in axialer Richtung entlang des Werkzeugschaftes zu verlängern, um Platz für die notwendigen Leitungen und Druckkammern zu schaffen.

Aus der DE 23 31 032 C ist es bekannt, diese Probleme dadurch zu vermeiden, daß die Kühlflüssigkeit dem Bohrer in axialer Richtung, durch seine obere Stirnfläche hindurch, zugeführt wird, so daß kein Problem des Einbringens gegen die Zentrifugalbeschleunigung und die Coriolisbeschleunigung erfolgt, wobei als ein Nachteil zu nennen ist, daß kein Druckknopf ausgebildet werden kann und daß in diesem Fall die Kühlmittelzufuhr extern, außerhalb des Handstückes, vorgesehen werden muß. Ein größerer Nachteil ist das komplizierte Einfädeln einer Art Nadel, die weit ins Innere des hohlen Bohrers ragt, entsprechend dünn ist und bei der Wartung immense Probleme verursacht. Die am oberen Kopfbereich des Handstückes notwendige Abdichtung ist im Vergleich dazu eher eine Nebenproblem.

Schließlich ist es aus der AT 401 142 B noch bekannt, eine Dichtung aus elastomerem Material zu verwenden, die während des Betriebes unter der Wirkung von Druckluft im wesentlichen zur Gänze vom Werkzeugschaft abhebt, die sozusagen in Bereitschaft ohne Druck am Werkzeugschaft anliegt, wodurch die bremsenden Kräfte durch Reibung und doch auch der Bedarf an Sperrluft verringert werden kann.

Es hat sich in der Praxis gezeigt, daß diese Ausführung auch bei sehr genauer Herstellung aufgrund der unvermeidlich vorhandenen Toleranzen der Bohrer, und besonders der Bohrerschäfte, nicht mit der erhofften Zuverlässigkeit und Genauigkeit funktioniert.

Es besteht daher nach wie vor ein großer Bedarf an einer Abdichtung innengekühlter Bohrer, wobei besonderes Augenmerk auf einfachen Aufbau, zuverläßiges Funktionieren und das Vermeiden zu großer Reibung das Ziel sein muß.

Die Erfindung schlägt zur Erreichung dieser Ziele vor, im wesentlichen axial verlaufende Dichtflächen vorzusehen.

Dies kann dadurch erreicht werden, daß der Werkzeugschaft im Dichtungsbereich mit drei unterschiedlichen Durchmessern versehen ist, die durch Schultern miteinander verbunden sind, daß als Dichtung zwei Dichtscheiben vorgesehen sind, jeweils eine an einer der beiden Schultern, daß zumindest eine der beiden Dichtscheiben in axialer Richtung verschieblich angeordnet ist, daß die beiden Dichtscheiben in radialer Richtung beweglich im Handstückkopf gelagert sind, und daß vorzugsweise die Dichtscheiben aus einem Material bestehen, das härter ist als das Material des Werkzeugschaftes an den Schultern.

Die Erfindung beruht auf der Erkenntnis, daß wegen den heutigen Anforderungen an die Hygiene und die Abtragsleistungen, die an die ärztlichen Bohrer und Werkzeuge gestellt werden, diese praktisch ausschließlich als Einweg-Werkzeuge ausgebildet sind, keinesfalls aber eine Lebensdauer aufweisen, die über einige wenige Einsätze hinausgeht.

Es liegen somit, bisher völlig unerkannt, die eigentlichen Ursachen für die Probleme der bisherigen Vorschläge darin, daß die im Werkzeugkopf eingebauten Dichtungsbestandteile durch das Werkzeug abgerieben oder beschädigt werden, so daß bereits nach kurzer Zeit ein Austausch der Dichtungen im Werkzeugkopf notwendig ist, was aufwendig und vor allem nicht von allen Benutzern selbst vorgenommen werden kann, sodaß es immer wieder notwendig ist, für solche an und für sich einfachen Wartungsschritte Fachleute hinzuzuziehen.

Dies wird durch die erfindungsgemäßen Maßnahmen zuverlässig vermieden, da es bei der erfindungsgemäßen Lösung mit einiger Wahrscheinlichkeit zu Abriebeffekten am Werkzeug, nämlich am Bohrerschaft, im Schulterbereich kommt, die Dichtung selbst aber auch einen oftmaligen Einsatz unterschiedlicher Werkzeuge mit hoher Zuverlässigkeit unbeschadet übersteht.

Die Erfindung wird im folgenden an Hand der Zeichnung näher erläutert.

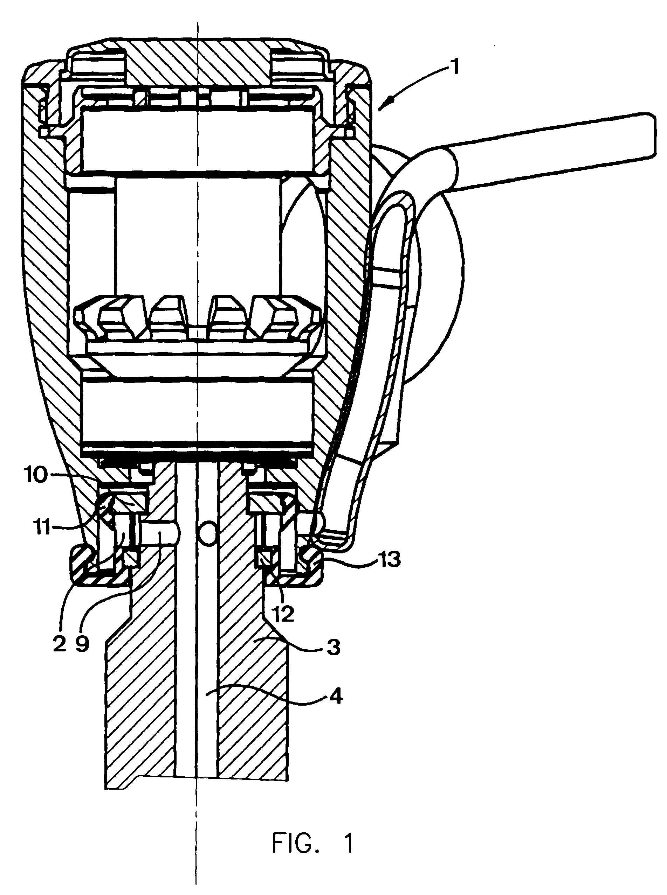

Dabei zeigt Fig. 1 einen erfindungsgemäß ausgebildeten Handstückkopf, rein schematisch im Schnitt,
die Fig. 2 den Dichtungsbereich eines Handstückkopfes mit einer anderen Ausführungsform der erfindungsgemäßen Abdichtung,
die Fig. 3 zeigt eine Dichtvorrichtung gemäß Fig. 2 in vergrößertem Maßstab in perspektivischer Ansicht vor dem Zusammenbau,
die Fig. 4 die Halterung der Dichtvorrichtung gemäß Fig. 1 und
die Fig. 5 einen Schnitt durch einen Werkzeugschaft im Dichtungsbereich.

Die Fig.1 zeigt einen Schnitt durch den Kopfbereich eines mit einer erfindungsgemäßen Abdichtung ausgerüsteten Handstückes. Im Handstück 1 ist die Werkzeugaufnahme bzw. die Spannvorrichtung nicht dargestellt, da sie nicht Teil der Erfindung ist und zu deren Verständnis nichts beiträgt. Im Handstückkopf 1 ist eine Kammer 2 vorgesehen, in der die Übergabe des Kühlfluids an das Werkzeug, beispielsweise ein Bohrer 3 bzw. die Einbringung dieses Kühlfluids in einen axialen Hohlraum 4 des Bohrers 3 erfolgt.

Der axiale Hohlraum 4 des Bohrers 3 ist an seinem werkzeugkopfseitigen Ende passend verschlossen, um zu verhindern, daß Kühlfluid in den Handstückkopf gelangen kann. In den meisten Fällen wird dabei der Hohlraum 4 ursprünglich als Durchgangsöffnung ausgebildet und sodann an dem genannten Ende wieder verschlossen.

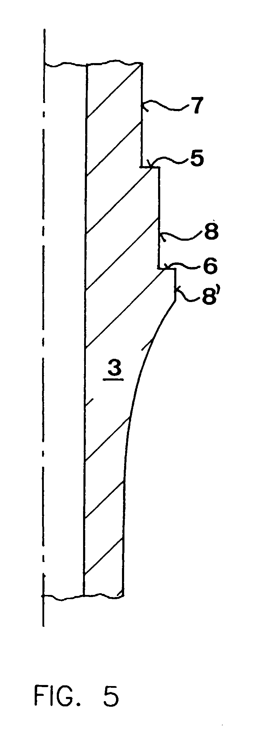

In dem Bereich des Bohrers, der im gebrauchsfertig eingesteckten Zustand im Bereich der Kammer 2 des Handstückkopfes 1 liegt, sind zwei radiale Abstufungen, sogenannte Schultern 5, 6 (Fig. 5) vorgesehen. Durch diese Schultern 5, 6 werden, in axialer Richtung gesehen, jeweils zwei zylindrische Bereiche mit unterschiedlichem Radius verbunden: Ein kopfseitig der Schulter 5 liegender zylindrischer Bereich 7 mit einem Durchmesser, der kleiner ist als der werkzeugseitig der Schulter 5 liegende zylindrische Bereich 8, der auch den kopfseitig der Schulter 6 liegenden zylindrischen Bereich mit einem Durchmesser, der kleiner ist als der werkzeugseitig der Schulter 6 liegende zylindrische Bereich 8' bildet.

Es erfolgt nun die Anordnung zweier Dichtscheiben 10, 12 im Handstückkopf so, daß eine mit der Schulter 5, die andere mit der Schulter 6 zusammenwirkt.

Der Werkzeugschaft 3 weist eine radiale Bohrung 9 auf, die an einer solchen axialen Stelle angeordnet ist, daß sie im eingesteckten Zustand des Werkzeugschaftes zwischen die beiden Dichtringe 10, 12 zu liegen kommt.

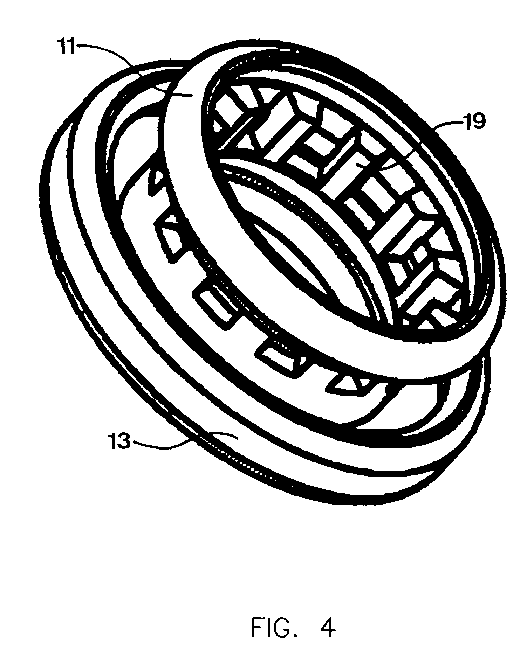

In der Ausführungsform gemäß der Fig. 1 und 4 ist der handstückkopfseitige Dichtring 10 in einem im wesentlichen torusartigen elastomeren Stützkörper 11 gelagert, der zweite werkzeugseitige Dichtring 12 wird von einem gleichzeitig als Abschlußteil dienenden elastomeren Ring 13 gehalten.

Die beiden elastomeren Halteteile 11, 13 sind, wie insbesondere aus Fig. 4 hervorgeht, mittels axialer Stege 19 miteinander verbunden und somit einstückig ausgebildet. Es ist selbverständlich möglich, auf die axialen Elemente zu verzichten und zwei getrennte Halterungen zu verwenden.

Die Halteteile - Stützkörper 11 und elastomerer Ring 13 - haben die Fixierung der Dichtscheiben 10 und 12 im Handstückkopf 1 zu bewerkstelligen und müssen dabei auch sicherstellen, daß die Dichtscheiben in beliebiger radialer Richtung ausweichen können. Auf diese Weise ist sichergestellt, daß Schrägstellungen des Bohrers oder auftretende Exzentrizitäten ausgeglichen werden können, ohne daß das Funktionieren der Vorrichtung wesentlich beeinträchtigt wird.

Es hat sich nämlich herausgestellt, daß in den meisten Fällen, in denen der Betrieb bei vorbekannten Vorrichtungen sehr rasch zu einer Herabsetzung oder Zerstörung der Dichtwirkung geführt hat, im wesentlichen nicht auf zu große Durchmesser der Werkzeugschäfte zurückzuführen war, sondern auf Deformationen und Schräglagen, die im Betrieb unvermeidlich sind.

Die beiden elastomeren Halteteile 11, 13 wirken auch in axialer Richtung auf die Dichtscheiben 10, 12, in dem Sinne, daß sie sie in Richtung zu der zugehörigen Schulter 5 bzw. 6 drängen. Durch diese leichte Belastung oder Vorspannung erreicht man eine flächige Berührung mit nur geringer Reibung.

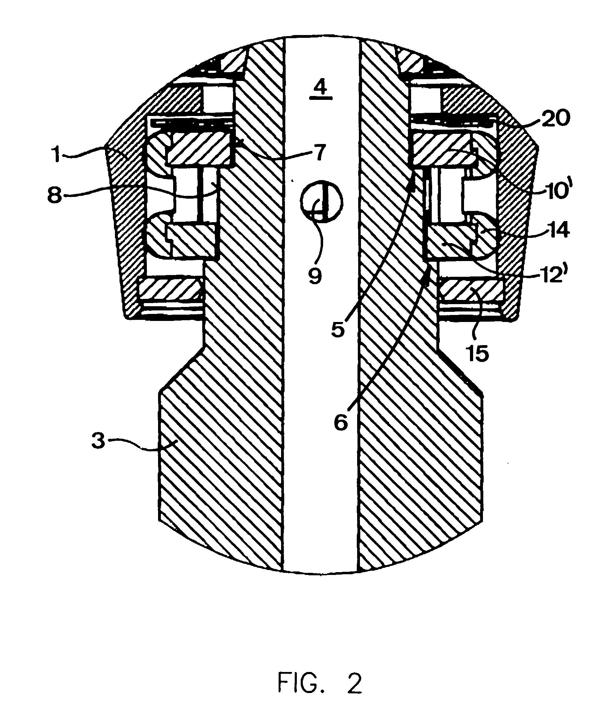

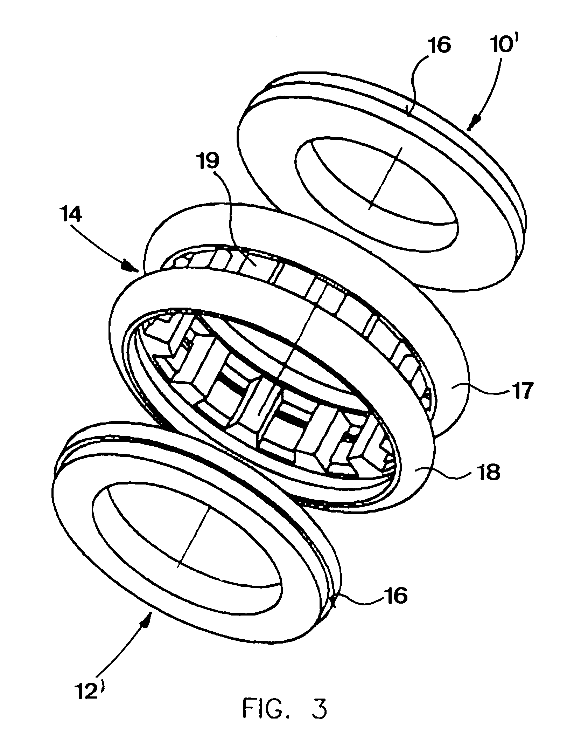

In Fig. 2 ist in vergrößertem Maßstab eine erfindungsgemäße Dichtanordnung ähnlich der in Fig. 1 dargestellt. Dabei sind wiederum die Schultern 5, 6 des Werkzeugschaftes 3 deutlich zu erkennen, die beiden Dichtscheiben 10' und 12' sind an ihrem Außenumfang gleich ausgebildet und in einer gemeinsamen elastomeren Halterung 14 (besser sichtbar in Fig. 3) gelagert. Dabei übernimmt die Halterung 14 sowohl die axiale als auch die radiale Fixierung der beiden Dichtscheiben 10', 12' und erlaubt es, die Kammer, in der das Kühlfluid zugeführt wird, als zylindrischen Raum ohne spezielle Stufen oder Einbauten auszubilden.

Eine kopfseitig der Halterung 14 angeordnete Feder 20 drückt die Halterung 14 nach unten, sodaß die Dichtscheiben 10', 12' gegen die ihnen jeweils zugeordnete Schulter 5, 6 gedrückt werden. Dies wird durch die elastomere Ausbildung der Halterung 14 ermöglicht, da bei starrer Ausbildung die Feder 20 nur auf eine der beiden Dichtscheiben wirkte.

Beim gezeigten Ausführungsbeispiel ist eine Abschlußscheibe 15 für den Kopf 1 des Handstückes vorgesehen, die seinem mechanischen Schutz, speziell bei entferntem Werkzeug, dient.

In Fig. 3 ist der Dichtmechanismus der Fig. 2 in zerlegtem Zustand perspektivisch dargestellt: Man erkennt die Dichtscheibe 10' oberhalb ihres Sitzes in der Halterung 14. Um den Sitz dieser Dichtscheibe 10' in der Halterung 14 zu verbessern, weist sie an ihrer Außenseite eine Abstufung 16 auf, die mit einer entsprechenden Ausnehmung in der Halterung 14 korrespondiert. Die Dichtscheibe 12' ist analog dazu aufgebaut. Die Halterung 14 besteht aus zwei ringförmigen Teilen 17, 18, die durch eine Vielzahl von Stegen 19 miteinander verbunden sind.

Damit ist sichergestellt, daß die Lage der beiden Dichtscheiben zueinander in axialer Richtung gewährleistet ist und daß dennoch jede einzelne der beiden Dichtscheiben unabhängig von der anderen in radialer Richtung beweglich ist. Durch den Aufbau der erfindungsgemäßen Dichtanordnung gemäß den Fig. 2 und 3 ist ein leichter Austausch und eine einfache Inspektion des Zustandes der Dichtanordnung möglich.

Als Materialien für die Halterungen 11, 13 und 14 kommen Gummi oder andere medizinisch unbedenkliche elastomere Materialien in Frage, die Dichtscheiben 10, 12, 10', 12' sind bevorzugt aus Hartmetall, Stahl, besonders bevorzugt aus Keramik oder aus sogenannten Hochleistungskunststoffen oder aus anderen, auf Verschleißfestigkeit optimierten Werkstoffen, auch aus Verbundwerkstoffen bzw. weisen sie verschleißfeste Beschichtungen auf.

Es hat sich bei Versuchen gezeigt, daß die inneren Bereiche der Stirnnflächen der Dichtscheiben, die ja die eigentliche Dichtung besorgen, durch die Schultern der Bohrerschäfte nicht verschlissen werden, sondern daß die Schultern der Bohrer eingeglättet werden, ähnlich wie dies beim Einlaufvorgang aufeinander gleitender Maschinenteile geschieht und daß es, wenn es bei einem Bohrer, der mehrmals verwendet wird, zu Dichtungsproblemen kommt, durch den Ersatz des Bohrers wieder zu einem dichten Sitz mit dem nächsten Bohrer kommt.

Die Erfindung ist nicht auf das dargestellte Ausführungsbeispiel beschränkt, sondern kann verschiedentlich abgewandelt werden. So ist es insbesondere nicht notwendig, die Durchmesserunterschiede zwischen den Zylinderflächen 7 und 8 bzw. 8 und 8' wie dargestellt, auszuführen. Es ist möglich, diese eben (normal zur Bohrerachse) dargestellten Flächen kegelig oder sphärisch (natürlich immer symmetrisch zur Bohrerachse) auszubilden, um so auf Schrägstellungen des Bohrers 3 bezüglich des Handstückkopfs 1 Bedacht zu nehmen. Die dabei auftretenden Winkel können so groß gewählt werden, daß man gerade noch von einer axialen Dichtung sprechen kann, somit bis 45°, wenn auch so große Winkel nicht bevorzugt werden.

Eine andere erfindungsgemäße Ausgestaltung ist beispielsweise dadurch realisierbar, daß (von oben nach unten, in Analogie zur Fig. 2) zuerst eine Tellerfeder, dann ein mit seinem äußeren Umfang an der Wand der zylindrischen Vertiefung sitzender O-Ring, an dessen inneren Kontur eine etwas stärker als in Fig. 2 dargestellt ausgebildete Dichtscheibe mit einer Schulter anliegt, auf der wiederum eine Tellerfeder sitzt, deren anderes Ende an einer analogen Kombination aus O-Ring und Dichtscheibe anliegt.

Wesentlich für die Funktionsfähigkeit ist auch die radiale Beweglichkeit jeder der Dichtscheiben, die die Anpassung an Bohrertoleranzen, Schrägstellungen, unrunden Lauf etc. ermöglicht, ohne das Funktionieren des Bohrers bzw. der Dichtung zu stören. Diese Beweglichkeit wird am einfachsten durch die Ausbildung der Halterungen aus elastomerem Material, beispielsweise Gummi (Kautschuk) erreicht.

## Patentansprüche

1. Ärztliches, insbesondere zahnärztliches, Handstück zur Verwendung mit einem innengekühlten Werkzeug mit einem axialen Hohlraum (4), bei dem das Kühlfluid in in wesentlicher radialer Richtung durch eine Bohrung (9) des Werkzeugschaftes (3) in den axialen Hohlraum (4) geführt wird und wobei die Bohrung (9) zwischen zwei, axialen Abstand voneinander aufweisenden, im Handstückkopf (1) angeordneten und ihn gegenüber dem Werkzeugschaft abdichtenden, Dichtungen angeordnet ist, dadurch gekennzeichnet, daß die Dichtungen Dichtscheiben (10,10';12,12') sind, deren Dichtflächen mit dem Werkzeugschaft im wesentlichen normal, konisch oder sphärisch zur Werkzeugachse verlaufen.

2. Handstück nach Anspruch 1, dadurch gekennzeichnet, daß daß der Werkzeugschaft (3) im Dichtungsbereich mit drei unterschiedlichen Durchmessern (7,8,8') versehen ist, von denen jeweils zwei (7,8:8,8') durch eine Schulter (5,6) miteinander verbunden sind, daß jeweils eine der Dichtscheiben (10,10';12,12') mit einer der beiden Schultern (5,6) zusammenwirkt, daß zumindest eine der beiden Dichtscheiben (5,6) in axialer Richtung verschieblich angeordnet ist, daß jede der Dichtscheiben (5,6) in radialer Richtung beweglich im Handstückkopf gelagert ist, und daß vorzugsweise die Dichtscheiben aus einem Material bestehen, das härter ist als das Material des Werkzeugschaftes (3) an den Schultern.

3. Handstück nach Anspruch 2, dadurch gekennzeichnet, daß die beiden Dichtscheiben (10',12') in einer gemeinsamen, bevorzugt elastomeren, Halterung (14) angeordnet sind, die in einem im wesentlichen zylindrischen Hohlraum des Handstückkopfes (1) angeordnet ist und unter der Wirkung einer axial wirkenden Feder (20) steht.

4. Handstück nach Anspruch 3, dadurch gekennzeichnet, daß die Feder (20) handstückkopfseitig der Halterung (14) angeordnet ist und eine Druckfeder, bevorzugt eine Tellerfeder, ist.

5. Handstück nach einem der vorangehenden Ansprüche, dadurch gekennzeichnet, daß die Dichtscheiben (10,10';12, 12') aus keramischen Material oder aus Hartmetall bestehen.

6. Handstück nach einem der vorangehenden Ansprüche, dadurch gekennzeichnet, daß die Halterung(en) (11,12;14) aus Elastomer, insbesondere aus Kautschuk, bestehen.

7. Werkzeug mit einem axialen Hohlraum (4) und einer eine Fluidverbindung zwischen dem axialen Hohlraum (4) und dem Mantel des Werkzeugschaftes (3) schaffenden Bohrung (9), zur Verwendung mit einem Handstück nach einem der Ansprüche 1 bis 6, dadurch gekennzeichnet, daß der Schaft (3) des Werkzeuges zumindest zwei Schultern (5,6) aufweist, von denen jede zwei Schaftbereiche (7,8;8,8') mit unterschiedlichem Durchmesser miteinander verbindet, und daß die Bohrung (9) zwischen den beiden Schultern (5,6) liegt.
